(19) Europäisches Patentamt
European Patent Office
Office européen des brevets

(11) **EP 4 742 488 A1**

(12) **EUROPEAN PATENT APPLICATION**
published in accordance with Art. 153(4) EPC

(43) Date of publication:
**13.05.2026 Bulletin 2026/20**

(51) International Patent Classification (IPC):
**H02J 3/46** *(2026.01)*    **H02J 3/24** *(2006.01)*

(21) Application number: **23944105.8**

(22) Date of filing: **08.08.2023**

(86) International application number:
**PCT/CN2023/109453**

(87) International publication number:
**WO 2025/007378 (09.01.2025 Gazette 2025/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.07.2023 CN 202310828553**

(71) Applicant: **Shanghai Sigeyuan Intelligent Technology Co., Ltd**
**Shanghai 200120 (CN)**

(72) Inventors:
• **QIN, Yijin**
  **Shanghai 200120 (CN)**
• **ZHANG, Zhen**
  **Shanghai 200120 (CN)**
• **ZHOU, Tao**
  **Shanghai 200120 (CN)**

(74) Representative: **Bayramoglu et al.**
**Mira Office**
**Kanuni Sultan Süleyman Boulevard 5387**
**Street Beytepe, floor 12, no:50**
**06800 Cankaya, Ankara (TR)**

(54) **OPTICAL STORAGE POWER CONTROL METHOD AND SYSTEM**

(57)    The present disclosure relates to a power control method and system for a photovoltaic (PV) energy storage system, which acquire relevant electrical parameters, such as an output voltage and an output current, of a fuel generator, calculate a current real-time electricity transmission power or real-time operating frequency of the fuel generator based on the acquired relevant electrical parameters, and determine, based on a current power flow direction, whether the fuel generator is in a power output state or a power input state, thereby determining whether the fuel generator is in an abnormal state. When it is detected that the fuel generator experiences or is about to experience reverse flow, an inverter is controlled to reduce an absolute output of its output power, thereby increasing an absolute output of an output power of the fuel generator and avoiding the reverse flow. When it is detected that power overload occurs in the fuel generator, the inverter is controlled to increase the absolute output of its output power, thereby reducing the absolute output of the output power of the fuel generator and avoiding the overload of the fuel generator. Therefore, the fuel generator can be protected, and it is ensured that a load can operate stably, thereby extending a service life for both the fuel generator and the load.

FIG. 1

**Description**

## TECHNICAL FIELD

The present disclosure relates to the technical field of photovoltaic (PV) control, and specifically, to a power control method and system for a PV energy storage system.

## BACKGROUND TECHNOLOGY

A PV energy storage system is a PV power generation system that harnesses solar energy and includes electronic components made of special materials, such as solar panels composed of crystalline silicon panels and inverters. The PV energy storage system can be connected to a power grid or a fuel generator to achieve stable electricity transmission. When the PV energy storage system operates in an off-grid mode, the inverter in the PV energy storage system and the fuel generator can work simultaneously. For example, the fuel generator remains connected in the case of uninterrupted power supply for a load. When the inverter and the fuel generator work simultaneously, the fuel generator acts as a generator to output power externally, and ensures a stable frequency and amplitude of an output voltage. This not only ensures normal operation of the load, but also guarantees stable operation of a power generation device and extends a service life of the power generation device.

In the PV energy storage system, when the inverter and the fuel generator work simultaneously, a change in a power demand of an external load results in a fluctuation in a required supply power. If no specific control is performed in this process, the fuel generator can enter an abnormal operating state such as reverse flow or overload.

Reverse flow: In this state, power output of the fuel generator is reversed, meaning that an external power flows into the fuel generator. This is an abnormal operating condition and is generally not permitted. In the reverse flow state, there is a risk that an output power of the inverter flows back into the fuel generator. In this case, the fuel generator has transformed from the generator to an electric motor, and its rotational velocity can exceed a rated limit, thereby increasing the frequency of the output voltage of the fuel generator and further resulting in load damage and other problems.

Overload: In this state, the output power of the fuel generator exceeds a capacity of the fuel generator. This is also an abnormal operating condition and is generally not allowed. In the overload state, there is a risk that the fuel generator is overloaded. In this case, the output power of the fuel generator exceeds the capacity of the fuel generator, and the rotational velocity of the fuel generator can drop, thereby decreasing the frequency of the output voltage of the fuel generator and further resulting in the load damage and other problems.

Therefore, how to achieve power control for the PV energy storage system in combination with a specific operating condition to protect the fuel generator is a technical problem to be solved by the present disclosure.

## CONTENT OF THE INVENTION

A primary objective of the present disclosure is to overcome at least one of the aforementioned drawbacks, and to provide a power control method and system for a PV energy storage system that can solve problems of reverse power flow and power overload of a fuel generator, ensure a stable supply voltage of a load, guarantee stable operation of the fuel generator, and extend a service life of a device.

In order to achieve the above objective, the present disclosure adopts the following technical solutions:
The present disclosure provides a power control method for a PV energy storage system, applicable to an operating condition in which a PV power generation system and a fuel generator jointly supply power to a load, where both an output phase line of an inverter of the PV power generation system and an output phase line of the fuel generator are connected to an electrical load to supply power to the electrical load, and including:

> S1, detecting an electricity transmission state of the fuel generator;
> S2, comparing detected electricity transmission state parameters with preconfigured thresholds, and determining an operating state of the fuel generator based on a comparison result; and
> S3, when determining that the fuel generator is in an abnormal operating state, adjusting an output power of the inverter and restoring the fuel generator to a normal operating state.

In an implementation of the present disclosure, the preconfigured thresholds include a reverse flow threshold and an overload threshold, the reverse flow threshold is configured to determine a reverse flow state of the fuel generator, and the overload threshold is configured to determine an overload state of the fuel generator.

In an implementation of the present disclosure, the reverse flow threshold is a reverse-flow power threshold or a reverse-flow frequency threshold; and in the step S2, a real-time electricity transmission power or a real-time operating frequency of the fuel generator is calculated based on the detected electricity transmission state parameters, or the real-time operating frequency is calculated based on a state signal fed back by the fuel generator; and whether the fuel generator is in the reverse flow state is determined by comparing the real-time electricity transmission power with the reverse-flow power threshold, or by comparing the real-time operating frequency with the reverse-flow frequency threshold.

In an implementation of the present disclosure, a power consumption symbol of the electrical load is defined as positive, output power symbols of the inverter and the fuel generator are defined as positive, and the reverse flow threshold is set as the reverse-flow power threshold; and when the real-time electricity transmission power is less than the reverse-flow power threshold, it is determined that the fuel generator is in the reverse flow state, and the output power of the inverter is controlled and increased.

In an implementation of the present disclosure, the reverse-flow power threshold is 5% to 10% of an absolute value of a rated power of the fuel generator, and is a negative number.

In an implementation of the present disclosure, in a process of controlling and reducing the output power of the inverter when the fuel generator is in the reverse flow state,

a proportional-integral-derivative (PID) controller performs calculation based on a deviation between an allowable minimum operating power and the real-time electricity transmission power of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

In an implementation of the present disclosure, a power consumption symbol of the electrical load is defined as positive, output power symbols of the inverter and the fuel generator are defined as positive, and the reverse flow threshold is set as the reverse-flow frequency threshold; and when the real-time operating frequency is greater than the reverse-flow frequency threshold, it is determined that the fuel generator is in the reverse flow state, and the output power of the inverter is controlled and reduced.

In an implementation of the present disclosure, the reverse-flow frequency threshold is 105% to 110% of a rated frequency of the fuel generator.

In an implementation of the present disclosure, in a process of controlling and reducing the output power of the inverter when the fuel generator is in the reverse flow state,

a PID controller performs calculation based on a deviation between an allowable maximum operating frequency and the real-time operating frequency of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

In an implementation of the present disclosure, in the step S1, an electricity transmission voltage and an electricity transmission current of the fuel generator are detected in real time, and the real-time electricity transmission power or the real-time operating frequency is calculated based on the real-time electricity transmission voltage and electricity transmission current, or the real-time operating frequency is calculated based on the state signal fed back by the fuel generator.

In an implementation of the present disclosure, the overload threshold is an overload power threshold or an overload frequency threshold; and in the step S2, a real-time electricity transmission power or a real-time operating frequency of the fuel generator is calculated based on the detected electricity transmission state parameters, or the real-time operating frequency is calculated based on a state signal fed back by the fuel generator; and whether the fuel generator is in the overload state is determined by comparing the real-time electricity transmission power with the overload power threshold, or by comparing the real-time operating frequency with the overload frequency threshold.

In an implementation of the present disclosure, a power consumption symbol of the electrical load is defined as positive, output power symbols of the inverter and the fuel generator are defined as positive, and the overload threshold is set as the overload power threshold; and when the real-time electricity transmission power is greater than the overload power threshold, it is determined that the fuel generator is in the overload state, and the output power of the inverter is controlled and increased.

In an implementation of the present disclosure, the overload power threshold is 105% to 110% of a rated power of the fuel generator, and is a positive number.

In an implementation of the present disclosure, in a process of controlling and increasing the output power of the inverter when the fuel generator is in the overload state,

a PID controller performs calculation based on a deviation between an allowable maximum operating power and the real-time electricity transmission power of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

In an implementation of the present disclosure, a power consumption symbol of the electrical load is defined as positive, output power symbols of the inverter and the fuel generator are defined as positive, and the overload threshold is set as the overload frequency threshold; and when the real-time operating frequency is less than the overload frequency threshold, it is determined that the fuel generator is in the overload state, and the output power of the inverter is controlled and increased.

In an implementation of the present disclosure, the overload frequency threshold is 90% to 95% of a rated frequency of the fuel generator.

In an implementation of the present disclosure, in a process of controlling and reducing the output power of the inverter when the fuel generator is in the overload state,

a PID controller performs calculation based on a deviation between an allowable minimum operating frequency and the real-time operating frequency of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

In an implementation of the present disclosure, in the step S1, an electricity transmission voltage of the fuel generator is detected in real time, and the real-time operating frequency of the fuel generator is obtained through voltage phase-locking based on the real-time electricity transmission voltage, or the real-time operating frequency is calculated based on the state signal fed back by the fuel generator.

In an implementation of the present disclosure, the fuel generator is a self-adaptive generator, and in the step S3, after the output power of the inverter is controlled and adjusted, the fuel generator adaptively adjusts an output power.

In an implementation of the present disclosure, in the step S3, after the output power of the inverter is controlled and adjusted, an output power of the fuel generator is adjusted based on a total power of the electrical load and the output power of the inverter until the output power of the fuel generator is restored to an output power under the normal operating state.

In particular, the present disclosure further provides a power control system for a PV energy storage system, applicable to an operating condition in which a PV power generation system and a fuel generator jointly supply power to a load, where both an output phase line of an inverter of the PV power generation system and an output phase line of the fuel generator are connected to an electrical load to supply power to the electrical load, and including:

a fuel generator data acquisition module, where a sampling input end is electrically connected to an output phase line of the fuel generator, and a sampling output end is connected to an input end of a fuel generator power calculation module;

the fuel generator power calculation module, where an output end of the fuel generator power calculation module is connected to an input end of an inverter power control module; and
the inverter power control module communicatively connected to the inverter; where
the inverter power control module sends an inverter power control instruction to the inverter based on a real-time power of the fuel generator, so as to control and adjust an output power of the inverter.

In an implementation of the present disclosure, the fuel generator power calculation module calculates a power based on voltage and current signals.

In an implementation of the present disclosure, the inverter power control module is communicatively connected to the fuel generator.

In particular, the present disclosure further provides a power control system for a PV energy storage system, applicable to an operating condition in which a PV power generation system and a fuel generator jointly supply power to a load, where both an output phase line of an inverter of the PV power generation system and an output phase line of the fuel generator are connected to an electrical load to supply power to the electrical load, and including:

a communication module communicatively connected to the fuel generator on one side and communicatively connected to a frequency calculation module on another side;
the frequency calculation module configured to acquire a state signal of the fuel generator through the communication module, and calculate a real-time operating frequency of the fuel generator based on the state signal, where an output end of the frequency calculation module is connected to an inverter power control module; and
the inverter power control module communicatively connected to the inverter; where
the inverter power control module sends an inverter power control instruction to the inverter based on the real-time operating frequency of the fuel generator, so as to control and adjust an output power of the inverter.

In an implementation of the present disclosure, the state signal of the fuel generator is a rotational velocity signal or a rotational frequency signal of the fuel generator.

Compared with the prior art, the power control method and system for a PV energy storage system in the present disclosure have the following advantages and beneficial effects:

The power control method and system for a PV energy storage system in the present disclosure acquire relevant electrical parameters, such as an output voltage and an output current, of a fuel generator, calculate a current real-time electricity transmission power or real-time operating frequency of the fuel generator based on the acquired relevant electrical parameters, and determine, based on a current power flow direction, whether the fuel generator is in a power output state or a power input state, thereby determining whether the fuel generator is in an abnormal state. When it is detected that the fuel generator experiences or is about to experience reverse flow, an inverter is controlled to reduce an absolute output of its output power, thereby increasing an absolute output of an output power of the fuel generator and avoiding the reverse flow. When it is detected that power overload occurs in the fuel generator, the inverter is controlled to increase the absolute output of its output power, thereby reducing the absolute output of the output power of the fuel generator and avoiding the overload of the fuel generator. Therefore, the fuel generator can be protected, and it is ensured that a load can operate stably, thereby extending a service life for both the fuel generator and the load.

## DESCRIPTION OF THE DRAWINGS

Some specific embodiments of the present disclosure will be described in detail below in an illustrative rather than restrictive manner with reference to the accompanying drawings. The same reference numerals in the accompanying drawings refer to like or similar components or parts. Those skilled in the art should understand that the accompanying drawings are not plotted to scale. In the accompanying drawings:

FIG. 1 is a schematic diagram of a process of determining reverse flow in a power control method for a PV energy storage system according to an embodiment of the present disclosure;
FIG. 2 is a schematic diagram of a power change in a process of determining and adjusting reverse flow in a power control method for a PV energy storage system according to an embodiment of the present disclosure;
FIG. 3 is a schematic diagram of a process of determining reverse flow in a power control method for a PV energy storage system according to another embodiment of the present disclosure;
FIG. 4 is a schematic diagram of a process of determining overload in a power control method for a PV energy storage system according to an embodiment of the present disclosure;
FIG. 5 is a schematic diagram of a power change in a process of determining and adjusting overload in a power control method for a PV energy storage system according to an embodiment of the present disclosure;
FIG. 6 is a schematic diagram of a process of determining overload in a power control method for a PV energy storage system according to another embodiment of the present disclosure;

FIG. 7 is a structural block diagram of a power control system for a PV energy storage system according to an embodiment of the present disclosure; and

FIG. 8 is a structural block diagram of a power control system for a PV energy storage system according to another embodiment of the present disclosure.

## SPECIFIC IMPLEMENTATIONS

The following clearly and completely describes the technical solutions of the present disclosure with reference to accompanying drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

The present disclosure describes a power control method for a PV energy storage system, applicable to an operating condition in which a PV power generation system and a fuel generator jointly supply power to a load, where both an output phase line of an inverter of the PV power generation system and an output phase line of the fuel generator are connected to an electrical load to supply power to the electrical load, and including the following steps:

S1: An electricity transmission state of the fuel generator is detected.

S2: Detected electricity transmission state parameters are compared with preconfigured thresholds, and an operating state of the fuel generator is determined based on a comparison result.

S3: When it is determined that the fuel generator is in an abnormal operating state, an output power of the inverter is adjusted and the fuel generator is restored to a normal operating state.

The power control method for a PV energy storage system in the present disclosure acquires relevant electrical parameters, such as an output voltage and an output current, of the fuel generator, calculates a current real-time electricity transmission power or real-time operating frequency of the fuel generator based on the acquired relevant electrical parameters, and determines, based on a current power flow direction, whether the fuel generator is in a power output state or a power input state, thereby determining whether the fuel generator is in an abnormal state. When it is detected that the fuel generator experiences or is about to experience reverse flow, the inverter is controlled to reduce an absolute output of its output power, thereby increasing an absolute output of an output power of the fuel generator and avoiding the reverse flow. When it is detected that power overload occurs in the fuel generator, the inverter is controlled to increase the absolute output of its output power, thereby reducing the absolute output of the output power of the fuel generator and avoiding the overload of the fuel generator. Therefore, the fuel generator can be protected, and it is ensured that the load can operate stably, thereby extending a service life for both the fuel generator and the load.

Abnormal operating states addressed by the present disclosure are a reverse flow state and an overload state, and corresponding configured thresholds are a reverse flow threshold and an overload threshold. That is, the reverse flow threshold is configured to determine the reverse flow state of the fuel generator, and the overload threshold is configured to determine the overload state of the fuel generator. The following will describe two handling methods for the two abnormal states in detail.

A power consumption symbol of the electrical load is defined as positive, and output power symbols of the inverter and the fuel generator are also defined as positive. The absolute output of the output power of the inverter is an absolute value of the output power of the inverter, which is a positive number. The absolute output of the output power of the fuel generator is an absolute value of the output power of the fuel generator, which is a positive number.

Embodiment 1:

In this embodiment, the configured reverse flow threshold is a reverse-flow power threshold. In the step S2, a real-time electricity transmission power of the fuel generator is calculated based on the detected electricity transmission state parameters; and whether the fuel generator is in the reverse flow state is determined by comparing the real-time electricity transmission power with the reverse-flow power threshold. The reverse flow threshold is set as the reverse-flow power threshold. When the real-time electricity transmission power is less than the reverse-flow power threshold, it is determined that the fuel generator is in the reverse flow state, and the output power of the inverter is controlled and reduced.

When the fuel generator is in the reverse flow state, it indicates that the absolute output of the output power of the inverter is too high, causing the reverse flow to the fuel generator. In this case, it is necessary to reduce the absolute output of the output power of the inverter to enable the fuel generator to get out of the reverse flow state and resume normal operation.

In an implementation, the reverse-flow power threshold is 5% to 10% of an absolute value of a rated power of the fuel generator, and is a negative number. In this embodiment, the rated power of the fuel generator is 400 kW. The reverse-flow power threshold is pre-configured as 5% of the absolute value of the rated power of the fuel generator, that is, the reverse-flow power threshold is -20 kW. It can be seen that in this embodiment, the reverse-flow power threshold is a negative number, meaning that in the reverse flow state, the fuel generator has transformed into an electric motor and become an electrical load that consumes power.

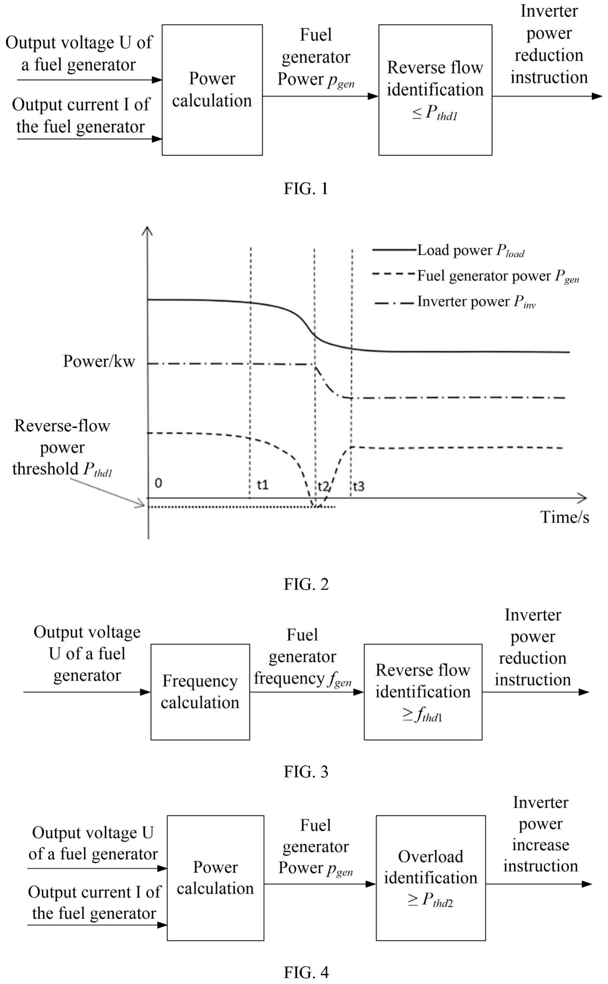

In a process of determining the reverse flow shown in FIG. 1, the real-time electricity transmission power $P_{gen}$ of the fuel generator is calculated based on the acquired output voltage U and output current I of the fuel generator. The real-time electricity transmission power $P_{gen}$ is compared with the reverse-flow power threshold $P_{thd1}$ to determine whether the fuel generator has entered the reverse flow state. When the real-time electricity transmission power $P_{gen}$ is less than or equal to the reverse-flow power threshold $P_{thd1}$, it is determined that the reverse flow has occurred or will occur. After it is determined that the fuel generator is in the reverse flow state, the output power of the inverter is controlled and reduced. A power of the fuel generator then increases and returns to a positive number, thereby restoring a power output state and overcoming the reverse flow state.

A power change in a process of determining and adjusting the reverse flow in this embodiment is shown in FIG. 2, and is specifically described as follows:

From time 0 to time t1, power consumption $P_{load}$ of the load is relatively stable, which is jointly provided by the fuel generator and the inverter. That is, the power consumption $P_{load}$ of the load is equal to the output power $P_{gen}$ of the fuel generator plus the output power $P_{inv}$ of the inverter.

Starting from the t1, the power consumption $P_{load}$ of the load decreases, but the output power $P_{inv}$ of the inverter remains basically unchanged, and the absolute output $P_{gen}$ of the output power of the fuel generator decreases.

At time t2, the output power $P_{gen}$ of the fuel generator is less than 0, reaching -20 kW or lower. In this case, it can be determined that the reverse flow has occurred. Therefore, a power reduction instruction is sent to the inverter to control and reduce the output power of the inverter.

The inverter then reduces its output power $P_{inv}$. Correspondingly, the absolute output power $P_{gen}$ of the fuel generator rises, and there is no longer a reverse flow trend. At time t3, the output powers of the fuel generator and the inverter are redistributed, and a PV energy storage system of the fuel generator reaches a new stable state.

In an implementation, in a process of controlling and reducing the output power of the inverter when the fuel generator is in the reverse flow state,

a PID controller performs calculation based on a deviation between an allowable minimum operating power and the real-time electricity transmission power of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

The minimum operating power $P_{genMin}$ of the fuel generator is pre-configured, which may be set to a fixed value such as 0.5 kW, or may be set to a range curve. A real-time output power of the fuel generator is $P_{gen}(t)$.

A process of determining, through the PID controller, to output the inverter power instruction that controls a power change of the inverter includes the following steps:

First, real-time power deviation $P_{genDelta}(t)$ between the minimum operating power $P_{genMin}$ and the real-time output power $P_{gen}(t)$ of the fuel generator is calculated. A formula for calculating the real-time power deviation $P_{genDelta}(t)$ is as follows:

$$P_{genDelta}(t) = P_{genMin}(t) - P_{gen}(t)$$

Then, PID calculations are performed on the real-time power deviation $P_{genDelta}(t)$, and calculation results are summed to obtain a PID control output, namely the inverter power control instruction $P_{invRef}(t)$. A specific calculation formula is as follows:

$$P_{invRef}(t) = K_p * P_{genDelta}(t) + K_i \int_0^t P_{genDelta}(t) + K_d \frac{dP_{genDelta}(t)}{dt}$$

In practice, the three parameters $K_p$, $K_j$, and $K_d$ are adjusted based on an actual control effect.

Embodiment 2:

The power control method for a PV energy storage system in this embodiment is adjusted based on Embodiment 1, except that the reverse flow threshold is a reverse-flow frequency threshold. In the step S2, a real-time operating frequency of the fuel generator is calculated based on the detected electricity transmission state parameters, or the real-time operating frequency is calculated based on a state signal fed back by the fuel generator. Whether the fuel generator is in the reverse flow state is determined by comparing the real-time operating frequency with the reverse-flow frequency threshold.

The real-time operating frequency of the fuel generator may be calculated by using a voltage phase-locking method based on the output voltage of the fuel generator, or may be calculated based on the state signal fed back by the fuel generator, such as a rotational velocity signal or a rotational frequency signal.

In this embodiment, the fuel generator is a single-phase generator, and a waveform of the output voltage of the fuel generator is a sine wave or a quasi-sine wave. Such an output voltage signal is denoted as $U_a$, and then the $U_b$ is subjected to signal processing to construct signal $U_b$ whose phase is 90° ahead of a phase of the $U_a$. Then, based on a phase-locked angle, Park transformation is performed on the $U_a$ and the $U_b$ to obtain $U_d$ and $U_q$. An expression for transforming the $U_d$ and the $U_q$ is as follows:

$$\begin{bmatrix} U_d \\ U_q \end{bmatrix} = \begin{bmatrix} cos(\theta) & sin(\theta) \\ -sin(\theta) & cos(\theta) \end{bmatrix} \begin{bmatrix} U_a \\ U_b \end{bmatrix}$$

In the above expression, $\theta$ represents an output anagle for phase-locking calculation.

The $U_q$ is used as an input to perform PID control, and angular velocity $\omega$ is output. The real-time operating frequency of the fuel generator is $\omega/2\pi$.

A process of calculating the real-time operating frequency based on the state signal fed back by the fuel generator is to perform calculation based on the rotational velocity signal or the rotational frequency signal that is fed back by the fuel generator. A rotational velocity of the fuel generator is proportional to the real-time operating frequency of the fuel generator. Therefore, the real-time operating frequency can be inferred based on the rotational velocity signal or the rotational frequency signal that is fed back by the fuel generator. For example, frequency f of the fuel generator is calculated as follows: frequency f of the fuel generator=quantity of magnetic pole pairs*rotational velocity/60. For example, a fuel generator has two magnetic pole pairs and a rotational velocity of 1500 rpm, and therefore, the frequency f is equal to 2*1500/60=50 Hz. For another example, a steam turbine generator produced in China has one magnetic pole pair and a rotational velocity of 3000 rpm, and therefore, the frequency f is equal to 1*3000/60=50 Hz. Therefore, the real-time operating frequency of the fuel generator can be detected by monitoring the rotational velocity and a rotational frequency of the fuel generator.

Whether the fuel generator is in the reverse flow state can be indirectly determined by identifying the frequency of the fuel generator. When the reverse flow occurs in the fuel generator, an electric motor in the fuel generator operates in an electric mode, and it is difficult to control the rotational velocity of the electric motor. As a result, overspeeding occurs, causing a frequency of the output voltage of the fuel generator to increase. Therefore, whether the reverse flow occurs in the fuel generator can be determined by calculating the frequency of the output voltage of the fuel generator.

In an implementation, the reverse-flow frequency threshold is 105% to 110% of an absolute value of a rated frequency of the fuel generator. In this embodiment, the rated frequency of the fuel generator is 50 Hz, and the reverse-flow frequency threshold $f_{thd1}$ is pre-configured as 105% of the rated frequency of the fuel generator, namely 52.5 Hz.

In a process of determining the reverse flow shown in FIG. 3, the real-time operating frequency $f_{gen}$ of the fuel generator is calculated based on the acquired output voltage U of the fuel generator. The real-time operating frequency $f_{gen}$ is compared with the reverse-flow frequency threshold $f_{thd1}$ to determine whether the fuel generator has entered the reverse flow state. When the real-time operating frequency $f_{gen}$ is greater than or equal to the reverse-flow frequency threshold $f_{thd1}$, it is determined that the reverse flow has occurred or will occur. After it is determined that the fuel generator is in the reverse flow state, the output power of the inverter is controlled and reduced.

In an implementation, in a process of controlling and reducing the output power of the inverter when the fuel generator is in the reverse flow state,

a PID controller performs calculation based on a deviation between an allowable maximum operating frequency and the real-time operating frequency of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

The maximum operating frequency $f_{genMax}$ of the fuel generator is pre-configured, which may be set to a fixed value such as 52 Hz, or may be set to a range curve. The real-time operating frequency of the fuel generator is calculated based on the output voltage of the fuel generator, and is denoted as $f_{gen}(t)$.

A process of determining, through the PID controller, to output the inverter power instruction that controls a power change of the inverter includes the following steps:

First, real-time frequency deviation $f_{genDelta}(t)$ between the maximum operating frequency $f_{genMax}$ and the real-time operating frequency $f_{gen}(t)$ of the fuel generator is calculated. A formula for calculating the real-time frequency deviation $f_{genDelta}(t)$ is as follows:

$$f_{genDelta}(t) = f_{genMax}(t) - f_{gen}(t)$$

Then, PID calculations are performed on the real-time frequency deviation $f_{genDelta}(D)$, and calculation results are summed to obtain a PID control output, namely the inverter power control instruction $P_{invRef}(t)$. A specific calculation formula is as follows:

$$P_{invRef}(t) = K_p * f_{genDelta}(t) + K_i \int_0^t f_{genDelta}(t) + K_d \frac{df_{genDelta}(t)}{dt}$$

In practice, the three parameters $K_p$, $K_i$, and $K_d$ can be adjusted based on an actual control effect.

It can be understood by those skilled in the art that in other embodiments, both a reverse-flow power threshold and the reverse-flow frequency threshold can be selected simultaneously. The reverse flow state can be determined separately based on the two parameters, thereby improving determination accuracy.

Embodiment 3:

In this embodiment, the configured overload threshold is an overload power threshold. In the step S2, a real-time electricity transmission power of the fuel generator is calculated based on the detected electricity transmission state parameters; and whether the fuel generator is in the overload state is determined by comparing the real-time electricity transmission power with the overload power threshold. The overload threshold is set as the overload power threshold. When the real-time electricity transmission power is greater than the overload power threshold, it is determined that the fuel generator is in the overload state, and the output power of the inverter is controlled and reduced.

In an implementation, the overload power threshold is 105% to 110% of a rated power of the fuel generator, and is a positive number. In this embodiment, the rated power of the fuel generator is 400 kW, and the overload power threshold is pre-configured as 105% of the rated power of the fuel generator, in other words, the overload power threshold is 420 kW.

In a process of determining the overload shown in FIG. 4, the real-time electricity transmission power $P_{gen}$ of the fuel generator is calculated based on the acquired output voltage U and output current I of the fuel generator. The real-time electricity transmission power $P_{gen}$ is compared with the overload power threshold $P_{thd2}$ to determine whether the fuel generator has entered the overload state. When the real-time electricity transmission power $P_{gen}$ is greater than or equal to the overload power threshold $P_{thd2}$, it is determined that the overload has occurred or will occur. After it is determined that the fuel generator is in the overload state, the output power of the inverter is controlled and increased.

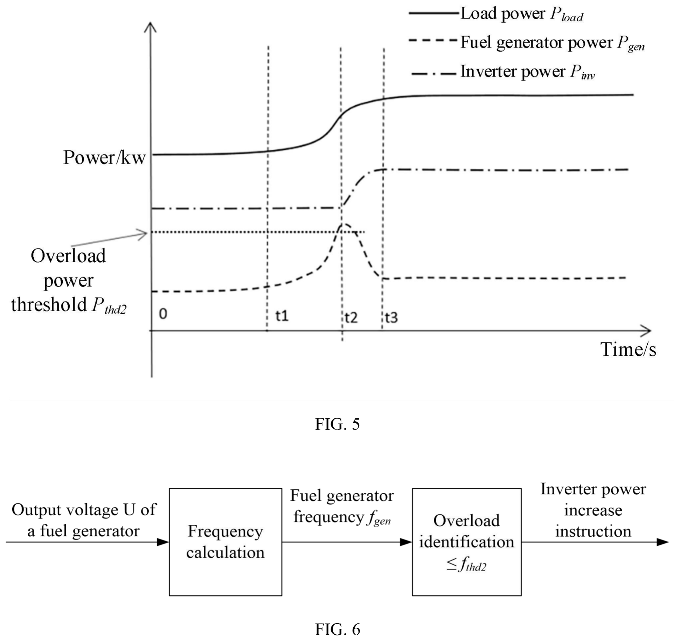

A power change in a process of determining and adjusting the overload in this embodiment is shown in FIG. 5, and is specifically described as follows:

From time 0 to time t1, power consumption $P_{load}$ of the load is relatively stable, which is jointly provided by the fuel generator and the inverter. That is, the power consumption $P_{load}$ of the load is equal to the output power $P_{gen}$ of the fuel generator plus the output power $P_{inv}$ of the inverter.

Starting from the t1, the power consumption $P_{load}$ of the load increases, but the output power $P_{inv}$ of the inverter remains basically unchanged, and the output power $P_{gen}$ of the fuel generator increases.

At time t2, the output power $P_{gen}$ of the fuel generator exceeds a maximum capacity of the fuel generator, reaching 420 kW. In this case, it can be determined that the overload has occurred. Therefore, a power reduction instruction is sent to the inverter to control and reduce the output power of the inverter.

The inverter then increases its output power $P_{inv}$. Correspondingly, the output power $P_{gen}$ of the fuel generator decreases, and there is no longer an overload trend. At time t3, the output powers of the fuel generator and the inverter are redistributed, and a PV energy storage system of the fuel generator reaches a new stable state.

In an implementation, in a process of controlling and increasing the output power of the inverter when the fuel generator is in the overload state,

a PID controller performs calculation based on a deviation between an allowable maximum operating power and the real-time electricity transmission power of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

The maximum operating power $P_{genMax}$ of the fuel generator is pre-configured, which may be set to a fixed value such as 410 kW, or may be set to a range curve. A real-time output power of the fuel generator is $P_{gen}(t)$.

A process of determining, through the PID controller, to output the inverter power instruction that controls a power change of the inverter includes the following steps:

First, real-time power deviation $P_{genDelta}(t)$ between the maximum operating power $P_{genMax}$ and the real-time output power $P_{gen}(t)$ of the fuel generator is calculated. A formula for calculating the real-time power deviation $P_{genDelta}(t)$ is as follows:

$$P_{genDelta}(t) = P_{genMax}(t) - P_{gen}(t)$$

Then, PID calculations are performed on the real-time power deviation $P_{genDelta}(t)$, and calculation results are summed to obtain a PID control output, namely the inverter power control instruction $P_{invRef}(t)$. A specific calculation formula is as follows:

$$P_{invRef}(t) = K_p * P_{genDelta}(t) + K_i \int_0^t P_{genDelta}(t) + K_d \frac{dP_{genDelta}(t)}{dt}$$

In practice, the three parameters $K_p$, $K_i$, and $K_d$ are adjusted based on an actual control effect.

Embodiment 4:

The power control method for a PV energy storage system in this embodiment is adjusted based on Embodiment 3, except that the overload threshold is an overload frequency threshold. In the step S2, a real-time operating frequency of the fuel generator is calculated based on the detected electricity transmission state parameters, or the real-time operating frequency is calculated based on a state signal fed back by the fuel generator. Whether the fuel generator is in the overload state is determined by comparing the real-time operating frequency with the overload frequency threshold. When the real-time operating frequency is less than the overload frequency threshold, it is determined that the fuel generator is in the overload state, and the output power of the inverter is controlled and reduced.

That is, whether the fuel generator is in the overload state can be indirectly determined by identifying a frequency of the fuel generator. When the overload occurs in the fuel generator, the output power of the fuel generator exceeds a capacity of the fuel generator, and it is difficult to control a rotational velocity of the fuel generator. As a result, downspeeding occurs, causing a frequency of the output voltage of the fuel generator to decrease. Therefore, whether the overload occurs in the fuel generator can be determined by calculating the frequency of the output voltage of the fuel generator.

In an implementation, the overload frequency threshold is 90% to 95% of a rated frequency of the fuel generator. In this embodiment, the rated frequency of the fuel generator is 50 Hz, and the overload frequency threshold **f$_{thd2}$** is pre-configured as 95% of the rated frequency of the fuel generator, namely 47.5 Hz.

In a process of determining the overload shown in FIG. 6, the real-time operating frequency $f_{gen}$ of the fuel generator is calculated based on the acquired output voltage U of the fuel generator. The real-time operating frequency $f_{gen}$ is compared with the overload frequency threshold $f_{thd2}$ to determine whether the fuel generator has entered the overload state. When the real-time operating frequency $f_{gen}$ is less than or equal to the overload frequency threshold $f_{thd2}$, it is determined that the overload has occurred or will occur. After it is determined that the fuel generator is in the overload state, the output power of the inverter is controlled and increased.

In an implementation, in a process of controlling and increasing the output power of the inverter when the fuel generator is in the overload state,

a PID controller performs calculation based on a deviation between an allowable minimum operating frequency and the real-time operating frequency of the fuel generator to output an inverter power instruction, where a transfer function of the PID controller is as follows:

$$H(s) = K_p + K_i \frac{1}{S} + K_d S$$

where $K_p$ represents a proportional adjustment coefficient, $K_i$ represents an integral adjustment coefficient, $K_d$ represents a differential adjustment coefficient, and S represents a complex variable.

The minimum operating frequency $f_{genMin}$ of the fuel generator is pre-configured, which may be set to a fixed value such as 48 Hz, or may be set to a range curve. The real-time operating frequency of the fuel generator is calculated based on the output voltage of the fuel generator, and is denoted as $f_{gen}(t)$.

A process of determining, through the PID controller, to output the inverter power instruction that controls a power change of the inverter includes the following steps:

First, real-time frequency deviation $f_{genDelta}(t)$ between the minimum operating frequency $f_{genMin}$ and the real-time operating frequency $f_{gen}(t)$ of the fuel generator is calculated. A formula for calculating the real-time frequency deviation $f_{genDelta}(t)$ is as follows:

$$f_{genDelta}(t) = f_{genmin}(t) - f_{gen}(t)$$

Then, PID calculations are performed on the real-time frequency deviation $f_{genDelta}(t)$, and calculation results are summed to obtain a PID control output, namely the inverter power control instruction $P_{invRef}(t)$. A specific calculation formula is as follows:

$$P_{invRef}(t) = K_p * f_{genDelta}(t) + K_i \int_0^t f_{genDelta}(t) + K_d \frac{df_{genDelta}(t)}{dt}$$

In practice, the three parameters $K_p$ , $K_i$ , and $K_d$ can be adjusted based on an actual control effect.

It can be understood by those skilled in the art that in other embodiments, both an overload power threshold and the overload frequency threshold can be selected simultaneously. The overload state can be determined separately based on the two parameters, thereby improving determination accuracy.

In addition, in other embodiments, any two, three or four of a reverse-flow power threshold, a reverse-flow frequency threshold, an overload power threshold, and the overload frequency threshold can be selected. The reverse flow state and/or the overload state can be separately determined based on the selected thresholds, thereby enabling diversified detection and improving the determination accuracy.

Embodiment 5:

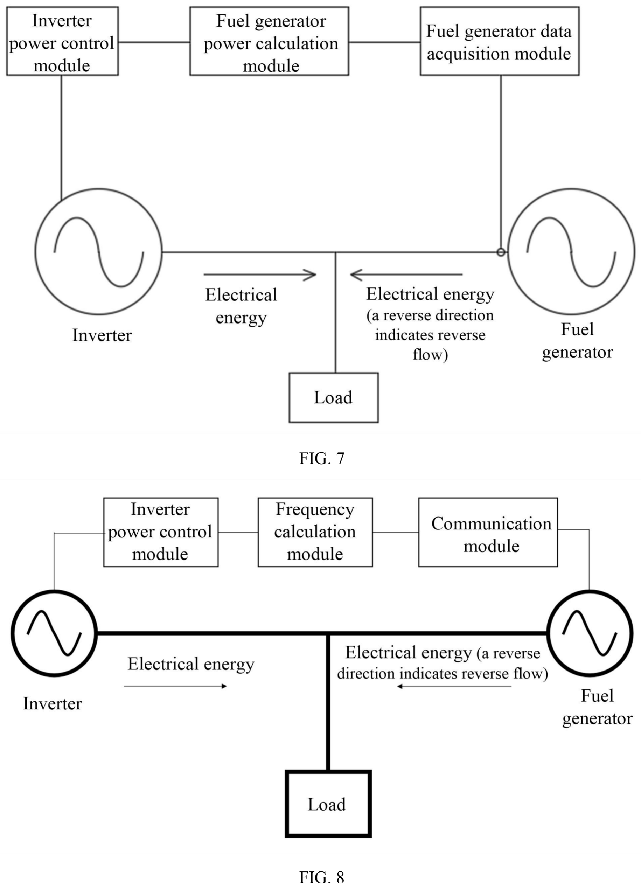

The present disclosure further provides a power control system for a PV energy storage system, which is applicable to an operating condition in which a PV power generation system and a fuel generator are grid-connected for power supply, where both an output phase line of an inverter of the PV power generation system and an output phase line of the fuel generator are connected to an electrical load to supply power to the electrical load. As shown in FIG. 7, the power control system for a PV energy storage system includes:

a fuel generator data acquisition module, where a sampling input end is electrically connected to an output phase line of the fuel generator, and a sampling output end is connected to an input end of a fuel generator power calculation module;

the fuel generator power calculation module, where an output end of the fuel generator power calculation module is connected to an input end of an inverter power control module; and

the inverter power control module communicatively connected to the inverter; where

the inverter power control module sends an inverter power control instruction to the inverter based on a real-time power of the fuel generator, so as to control and adjust an output power of the inverter.

In an implementation, the fuel generator power calculation module calculates a power based on voltage and current signals.

In an implementation, the inverter power control module is communicatively connected to the fuel generator.

The power control system for a PV energy storage system in this embodiment acquires relevant electrical parameters, such as an output voltage and an output current, of the fuel generator, calculates a current real-time electricity transmission power or real-time operating frequency of the fuel generator by using the fuel generator power calculation module based on the acquired relevant electrical parameters, determines, based on a current power flow direction, whether the fuel generator is in a power output state or a power input state, determines an abnormal state of the fuel generator by using the inverter power control module, and generates a corresponding inverter power control instruction based on a type of the abnormal state.

When it is detected that the fuel generator experiences or is about to experience reverse flow, the inverter is controlled to reduce its output power, thereby increasing an output power of the fuel generator and avoiding the reverse flow. When it is detected that power overload occurs in the fuel generator, the inverter is controlled to increase its output power, thereby reducing the output power of the fuel generator and avoiding the overload of the fuel generator. Therefore, the fuel generator can be protected, and it is ensured that a load can operate stably, thereby extending a service life for both the fuel generator and the load.

Embodiment 6:

This embodiment provides a power control system for a PV energy storage system, which is applicable to an operating condition in which a PV power generation system and a fuel generator jointly supply power to a load, where both an output phase line of an inverter of the PV power generation system and an output phase line of the fuel generator are connected to an electrical load to supply power to the electrical load. As shown in FIG. 8, the power control system for a PV energy storage system includes:

a communication module communicatively connected to the fuel generator on one side and communicatively connected to a frequency calculation module on another side;
the frequency calculation module configured to acquire a state signal of the fuel generator through the communication module, and calculate a real-time operating frequency of the fuel generator based on the state signal, where an output end of the frequency calculation module is connected to an inverter power control module; and
the inverter power control module communicatively connected to the inverter; where
the inverter power control module sends an inverter power control instruction to the inverter based on the real-time operating frequency of the fuel generator, so as to control and adjust an output power of the inverter.

The state signal of the fuel generator is a rotational velocity signal or a rotational frequency signal of the fuel generator.

The above embodiments are intended to illustrate only the technical conception and characteristics of the present disclosure, and are intended to enable a person familiar with the technology to understand content of the present disclosure and apply the content accordingly, and shall not limit the scope of protection of the present disclosure thereby. Any equivalent change or modification in accordance with the spiritual essence of the present disclosure shall fall within the scope of protection of the present disclosure.

**Claims**

1. A power control method for a photovoltaic (PV) energy storage system, applicable to an operating condition in which a PV power generation system and a fuel generator jointly supply power to a load, wherein both an output phase line of an inverter of the PV power generation system and an output phase line of the fuel generator are connected to and supply power to an electrical load, the power control method comprising:

S1, detecting an electricity transmission state of the fuel generator;
S2, comparing detected electricity transmission state parameters with preconfigured thresholds, and determining an operating state of the fuel generator based on a comparison result; and
S3, when determining that the fuel generator is in an abnormal operating state, adjusting an output power of the inverter and restoring the fuel generator to a normal operating state.

**2.** The power control method for a PV energy storage system according to claim 1, wherein the preconfigured thresholds comprise a reverse flow threshold and an overload threshold, wherein the reverse flow threshold is configured to determine a reverse flow state of the fuel generator, and the overload threshold is configured to determine an overload state of the fuel generator.

**3.** The power control method for a PV energy storage system according to claim 2, wherein the reverse flow threshold is a reverse-flow power threshold or a reverse-flow frequency threshold; and wherein in the step S2, a real-time electricity transmission power or a real-time operating frequency of the fuel generator is calculated based on the detected electricity transmission state parameters, or the real-time operating frequency is calculated based on a state signal fed back by the fuel generator, and wherein whether the fuel generator is in the reverse flow state is determined by comparing the real-time electricity transmission power with the reverse-flow power threshold, or by comparing the real-time operating frequency with the reverse-flow frequency threshold.

**4.** The power control method for a PV energy storage system according to claim 3, wherein a power consumption symbol of the electrical load is defined as positive, output power symbols of the inverter and the fuel generator are defined as positive, and the reverse flow threshold is set as the reverse-flow power threshold, and wherein when the real-time electricity transmission power is less than the reverse-flow power threshold, it is determined that the fuel generator is in the reverse flow state, and the output power of the inverter is controlled and reduced.

**5.** The power control method for a PV energy storage system according to claim 4, wherein the reverse-flow power threshold is 5% to 10% of an absolute value of a rated power of the fuel generator, and is a negative number.

**6.** The power control method for a PV energy storage system according to claim 4, wherein in a process of controlling and reducing the output power of the inverter when the fuel generator is in the reverse flow state,

a proportional-integral-derivative (PID) controller performs calculation based on a deviation between an allowable minimum operating power and the real-time electricity transmission power of the fuel generator to output an inverter power instruction, wherein a transfer function of the PID controller is as follows:

$$H(s) = K_p + K_i \frac{1}{S} + K_d S$$

wherein $K_p$ represents a proportional adjustment coefficient, $K_i$ represents an integral adjustment coefficient, $K_d$ represents a differential adjustment coefficient, and S represents a complex variable.

**7.** The power control method for a PV energy storage system according to claim 3, wherein a power consumption symbol of the electrical load is defined as positive, output power symbols of the inverter and the fuel generator are defined as positive, and the reverse flow threshold is set as the reverse-flow frequency threshold, and wherein when the real-time operating frequency is greater than the reverse-flow frequency threshold, it is determined that the fuel generator is in the reverse flow state, and the output power of the inverter is controlled and increased.

**8.** The power control method for a PV energy storage system according to claim 7, wherein the reverse-flow frequency threshold is 105% to 110% of a rated frequency of the fuel generator.

**9.** The power control method for a PV energy storage system according to claim 7, wherein in a process of controlling and reducing the output power of the inverter when the fuel generator is in the reverse flow state,

a PID controller performs calculation based on a deviation between an allowable maximum operating frequency and the real-time operating frequency of the fuel generator to output an inverter power instruction, wherein a transfer function of the PID controller is as follows:

$$H(s) = K_p + K_i \frac{1}{S} + K_d S$$

wherein $K_p$ represents a proportional adjustment coefficient, $K_i$ represents an integral adjustment coefficient, $K_d$ represents a differential adjustment coefficient, and S represents a complex variable.

10. The power control method for a PV energy storage system according to any one of claims 3 to 9, wherein in the step S1, an electricity transmission voltage and an electricity transmission current of the fuel generator are detected in real time, and the real-time electricity transmission power or the real-time operating frequency is calculated based on the real-time electricity transmission voltage and electricity transmission current, or the real-time operating frequency is calculated based on the state signal fed back by the fuel generator.

11. The power control method for a PV energy storage system according to claim 2, wherein the overload threshold is an overload power threshold or an overload frequency threshold, wherein in the step S2, a real-time electricity transmission power or a real-time operating frequency of the fuel generator is calculated based on the detected electricity transmission state parameters, or the real-time operating frequency is calculated based on a state signal fed back by the fuel generator, and wherein whether the fuel generator is in the overload state is determined by comparing the real-time electricity transmission power with the overload power threshold, or by comparing the real-time operating frequency with the overload frequency threshold.

12. The power control method for a PV energy storage system according to claim 10, wherein a power consumption symbol of the electrical load is defined as positive, output power symbols of the inverter and the fuel generator are defined as positive, and the overload threshold is set as the overload power threshold, and wherein when the real-time electricity transmission power is greater than the overload power threshold, it is determined that the fuel generator is in the overload state, and the output power of the inverter is controlled and increased.

13. The power control method for a PV energy storage system according to claim 12, wherein the overload power threshold is 105% to 110% of a rated power of the fuel generator, and is a positive number.

14. The power control method for a PV energy storage system according to claim 12, wherein in a process of controlling and increasing the output power of the inverter when the fuel generator is in the overload state,

a PID controller performs calculation based on a deviation between an allowable maximum operating power and the real-time electricity transmission power of the fuel generator to output an inverter power instruction, wherein a transfer function of the PID controller is as follows:

$$H(s) = K_p + K_i \frac{1}{S} + K_d S$$

wherein $K_p$ represents a proportional adjustment coefficient, $K_i$ represents an integral adjustment coefficient, $K_d$ represents a differential adjustment coefficient, and S represents a complex variable.

15. The power control method for a PV energy storage system according to claim 11, wherein a power consumption symbol of the electrical load is defined as positive, output power symbols of the inverter and the fuel generator are defined as positive, and the overload threshold is set as the overload frequency threshold, and wherein when the real-time operating frequency is less than the overload frequency threshold, it is determined that the fuel generator is in the overload state, and the output power of the inverter is controlled and increased.

16. The power control method for a PV energy storage system according to claim 15, wherein the overload frequency threshold is 90% to 95% of a rated frequency of the fuel generator.

17. The power control method for a PV energy storage system according to claim 15, wherein in a process of controlling and increasing the output power of the inverter when the fuel generator is in the overload state,

a PID controller performs calculation based on a deviation between an allowable minimum operating frequency and the real-time operating frequency of the fuel generator to output an inverter power instruction, wherein a transfer function of the PID controller is as follows:

$$H(s) = K_p + K_i \frac{1}{S} + K_d S$$

wherein $K_p$ represents a proportional adjustment coefficient, $K_i$ represents an integral adjustment coefficient, $K_d$ represents a differential adjustment coefficient, and S represents a complex variable.

18. The power control method for a PV energy storage system according to any one of claims 11 to 17, wherein in the step S1, an electricity transmission voltage of the fuel generator is detected in real time, and the real-time operating frequency of the fuel generator is obtained through voltage phase-locking based on the real-time electricity transmission voltage, or the real-time operating frequency is calculated based on the state signal fed back by the fuel generator.

19. The power control method for a PV energy storage system according to claim 1, wherein the fuel generator is a self-adaptive generator, and in the step S3, after the output power of the inverter is controlled and adjusted, the fuel generator adaptively adjusts an output power.

20. The power control method for a PV energy storage system according to claim 1, wherein in the step S3, after the output power of the inverter is controlled and adjusted, an output power of the fuel generator is adjusted based on a total power of the electrical load and the output power of the inverter until the output power of the fuel generator is restored to an output power under the normal operating state.

21. A power control system for a PV energy storage system, applicable to an operating condition in which a PV power generation system and a fuel generator jointly supply power to a load, wherein both an output phase line of an inverter of the PV power generation system and an output phase line of the fuel generator are connected to an electrical load to supply power to the electrical load, and the power control system comprising:

   a fuel generator data acquisition module, wherein a sampling input end is electrically connected to an output phase line of the fuel generator, and a sampling output end is connected to an input end of a fuel generator power calculation module;
   the fuel generator power calculation module, wherein an output end of the fuel generator power calculation module is connected to an input end of an inverter power control module; and
   the inverter power control module communicatively connected to the inverter; wherein
   the inverter power control module sends an inverter power control instruction to the inverter based on a real-time power of the fuel generator, so as to control and adjust an output power of the inverter.

22. The power control system for a PV energy storage system according to claim 21, wherein the fuel generator power calculation module calculates a power based on voltage and current signals.

23. The power control system for a PV energy storage system according to claim 21, wherein the inverter power control module is communicatively connected to the fuel generator.

24. A power control system for a PV energy storage system, applicable to an operating condition in which a PV power generation system and a fuel generator jointly supply power to a load, wherein both an output phase line of an inverter of the PV power generation system and an output phase line of the fuel generator are connected to an electrical load to supply power to the electrical load, and the power control system comprising:

   a communication module communicatively connected to the fuel generator on one side and communicatively connected to a frequency calculation module on another side;
   the frequency calculation module configured to acquire a state signal of the fuel generator through the communication module, and calculate a real-time operating frequency of the fuel generator based on the state signal, wherein an output end of the frequency calculation module is connected to an inverter power control module; and
   the inverter power control module communicatively connected to the inverter; wherein
   the inverter power control module sends an inverter power control instruction to the inverter based on the real-time operating frequency of the fuel generator, so as to control and adjust an output power of the inverter.

25. The power control system for a PV energy storage system according to claim 24, wherein the state signal of the fuel generator is a rotational velocity signal or a rotational frequency signal of the fuel generator.

FIG. 1

FIG. 2

FIG. 3

FIG. 4

FIG. 5

FIG. 6

FIG. 7

FIG. 8

## INTERNATIONAL SEARCH REPORT

| International application No. |
| --- |
| **PCT/CN2023/109453** |

| A. | CLASSIFICATION OF SUBJECT MATTER |
| --- | --- |

H02J 3/46(2006.01)i;  H02J 3/24(2006.01)i

According to International Patent Classification (IPC) or to both national classification and IPC

| B. | FIELDS SEARCHED |
| --- | --- |

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT ENTXT ENTXTC DWPI WPABS CNKI IEEE: 光伏, 太阳能, 微网, 微电网, 风, 电网. 燃油发电机, 功率, 调整, 调节. 输出. 检测, 异常, 过载, 逆流, 逆变器, solar, micro-grid, wind, grid, fuel generator. power, regulation, output, detect, abnormal. overload, countercurrent, inverter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109067308 A (GUANGZHOU POWER SUPPLY BUREAU CO., LTD.) 21 December 2018 (2018-12-21) <br> description, paragraphs 22-64, and figures 1-5 | 1, 19-25 |
| Y | CN 109067308 A (GUANGZHOU POWER SUPPLY BUREAU CO., LTD.) 21 December 2018 (2018-12-21) <br> description, paragraphs 22-64, and figures 1-5 | 2-18 |
| Y | CN 105098952 A (HUBEI UNIVERSITY OF TECHNOLOGY) 25 November 2015 (2015-11-25) <br> description, paragraphs 26-46, and figures 1-3 | 2-18 |
| Y | CN 102684554 A (EAST-WEST CONTROL GROUP (SHENYANG) CO., LTD.) 19 September 2012 (2012-09-19) <br> description, paragraphs 15-21, and figures 1-2 | 2-18 |
| A | CN 104052159 A (DONGFANG ELECTRIC CORP.) 17 September 2014 (2014-09-17) <br> entire document | 1-25 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **27 February 2024** | **08 March 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/109453**

### C.     DOCUMENTS CONSIDERED TO BE RELEVANT

| Category* | Citation of document, with indication, where appropriate, of the relevant passages | Relevant to claim No. |
|---|---|---|
| A | US 2007047163 A1 (LUTZE HANS H et al.) 01 March 2007 (2007-03-01) entire document | 1-25 |

Form PCT/ISA/210 (second sheet) (July 2022)

## INTERNATIONAL SEARCH REPORT
### Information on patent family members

International application No.

**PCT/CN2023/109453**

| Patent document cited in search report | | | Publication date (day/month/year) | Patent family member(s) | | | Publication date (day/month/year) |
|---|---|---|---|---|---|---|---|
| CN | 109067308 | A | 21 December 2018 | None | | | |
| CN | 105098952 | A | 25 November 2015 | None | | | |
| CN | 102684554 | A | 19 September 2012 | CN | 102684554 | B | 30 September 2015 |
| CN | 104052159 | A | 17 September 2014 | None | | | |
| US | 2007047163 | A1 | 01 March 2007 | US | 7372173 | B2 | 13 May 2008 |

Form PCT/ISA/210 (patent family annex) (July 2022)